# FASCICULE DE BREVET EUROPEEN

(11) **EP 0 750 241 B1**
(45) Date de publication et mention de la délivrance du brevet: **08.09.1999**
(21) Numéro de dépôt: 96420210.5
(22) Date de dépôt: 21.06.1996
(51) Int. Cl.: G05D 16/20, F16K 31/06, F15B 13/044, B60T 8/36, F16H 61/02

(54) **Régulateur hydraulique de débit**
Hydraulik-Durchflussregler
Hydraulic flow controller

(30) Priorité: 23.06.1995 FR 9507793
(43) Date de publication de la demande: 27.12.1996
(73) Titulaire: EATON S.A.M., MC-98000 Monaco (MC)
(72) Inventeur: Magnaval, Jean-Louis, 06700 Saint Laurent du Var (FR)
(74) Mandataire: Bratel, Gérard

(56) Documents cités:
- EP-A- 0 254 483
- EP-A- 0 452 174
- EP-A- 0 485 737
- WO-A-93/18327
- DE-A- 4 324 589
- DE-A- 4 332 056

## Description

La présente invention concerne un régulateur hydraulique de débit, à action proportionnelle, c'est-à-dire permettant d'obtenir un débit de fluide hydraulique proportionnel à une grandeur électrique et, plus particulièrement, à l'intensité d'un courant électrique alimentant un électro-aimant faisant partie du régulateur de débit. Un tel régulateur, permettant une régulation progressive de débit par modification de la section de découvrement d'au moins une lumière traversée par le fluide hydraulique, est notamment utilisable dans le domaine de l'industrie automobile.

Les régulateurs de débit de ce genre ont actuellement très peu d'applications dans le domaine de l'automobile. Ils sont néanmoins connus, et leur application est beaucoup plus courante dans d'autres domaines d'activités : véhicules industriels, commande de machines, etc... Dans le cas des applications existantes, pour augmenter la précision de la commande, il est utilisé un potentiomètre de "recopie" qui informe de la position du noyau mobile de l'électro-aimant, donc de la valeur de la section instantanée de passage du fluide hydraulique. La régulation de débit s'effectue ainsi avec un retour d'information externe, ce qui complique et renchérit le dispositif, mais rend aussi le fonctionnement imparfait ; en effet, les effets des variations de température de fonctionnement, se traduisant par un changement de viscosité modifiant le débit du fluide, ne sont pas pris en compte par les régulations actuelles qui s'effectuent uniquement en position et/ou ne tiennent pas directement compte du débit réel.

On connaît, par le document EP-A-0254483, un régulateur hydraulique à action proportionnelle, comprenant un électro-aimant à noyau mobile et agissant par variation de la section de décrouvrement d'au moins une lumière traversée par un débit de fluide hydraulique, de telle sorte que la grandeur de sortie du régulateur soit proportionnelle à un courant électrique alimentant la bobine de l'électro-aimant. Plus particulièrement, ce régulateur connu comprend, dans le prolongement de son électro-aimant, un distributeur hydraulique avec une chemise fixe, pourvue d'au moins un orifice radial de sortie du fluide, espacé axialement du ou des orifices d'entrée. A l'intérieur de la chemise est monté coulissant un tiroir hydraulique qui possède deux portées entre lesquelles s'étend une chambre annulaire, le tiroir étant lié axialement au noyau mobile de l'électro-aimant. Ainsi, en fonctionnement, le tiroir est déplacé par le noyau mobile en obturant plus ou moins le ou les orifices d'entrée ou de sortie, ce tiroir pouvant être en équilibre sous l'effet combiné de l'effort hydrodynamique exercé par le débit de fluide passant par la section de découvrement des orifices, de l'effet d'un ressort de rappel, et de la force générée par l'électro-aimant, l'effort hydrodynamique servant de contre-réaction à l'intérieur du régulateur.

Le régulateur hydraulique du document EP-A-0254483 est essentiellement un régulateur de pression, la grandeur de sortie régulée étant la pression du fluide hydraulique qui le traverse. Toutefois, ce document suggère (cf. colonne 6, ligne 52 à colonne 7, ligne 8) que, dans une variante, un régulateur de conformation analogue peut être utilisé aussi pour ajuster le débit du fluide qui le traverse. Le document précité peut ainsi être considéré comme divulguant aussi un régulateur hydraulique de débit, correspondant alors au préambule de la revendication 1.

Toutefois, le régulateur du document EP-A-0254483 possède un unique ressort interne, ce qui limite les possibilités de réglage des caractéristiques du régulateur. De plus, la liaison entre le noyau de l'électro-aimant et le tiroir hydraulique y est assurée par un composant désigné comme "plongeur", ce qui suggère un composant magnétique.

La présente invention vise à perfectionner un régulateur hydraulique du genre décrit ci-dessus, pour en améliorer le fonctionnement mécanique et magnétique.

A cet effet, l'invention a pour objet un régulateur hydraulique de débit, selon le préambule de la revendication 1, dans lequel le tiroir hydraulique est lié axialement au noyau mobile de l'électro-aimant, dans un sens de déplacement, par un poussoir amagnétique prolongeant le noyau mobile en direction du distributeur hydraulique et appuyé sur une extrémité du tiroir, et dans le sens opposé, par un ressort monté à l'intérieur du distributeur hydraulique et assurant un contact permanent entre le tiroir hydraulique et le poussoir amagnétique, et dans lequel il est prévu, du côté de l'électro-aimant, un ressort de calibrage, poussant l'ensemble constitué par le noyau mobile et par le poussoir amagnétique en direction du distributeur hydraulique.

On réalise ainsi un régulateur de débit, dans lequel un électro-aimant "proportionnel" à action directe vient régler la position axiale d'un tiroir de distribution ; le contrôle de cette position, déterminant le débit de fluide, s'effectue avec un "rebouclage" interne par l'effort hydrodynamique (de sens identique ou opposé à l'effort de poussée de l'électro-aimant sur le tiroir) généré par le débit lui-même.

Plus particulièrement, cet effort hydrodynamique a comme origine la variation de la vitesse d'écoulement du fluide, le long du tiroir; cette variation de vitesse se traduit par une différence de pression, en différents points du filet de fluide passant dans le tiroir, selon la formule : F = qm x ΔV. Etant donné que l'on contrôle ici un effort avec une différence de pression constante entre le circuit d'alimentation et le circuit d'utilisation du fluide, la régulation de débit est indépendante de la densité du fluide et, donc, de sa température (pour un écoulement turbulent). L'effet de rétroaction généré par l'effort hydrodynamique viendra corriger la section de régulation.

Cette régulation de débit avec retour d'information interne permet, par rapport à d'autres dispositions constructives connues, de minimiser les effets des variations de température de fonctionnement.

Grâce à la disposition de ressorts prévue, le contact entre le tiroir et le poussoir est rendu permanent quelles que soient les conditions de fonctionnement. Le poussoir amagnétique permet de canaliser le flux magnétique dans une zone active de l'électro-aimant, afin d'assurer le fonctionnement proportionnel de celui-ci. De plus, le "couplage" des deux éléments mobiles, que sont d'une part le noyau mobile et d'autre part le tiroir hydraulique, réalisé par le poussoir amagnétique et par les ressorts placés de part et d'autre de tout cet équipage mobile, améliore les phases dynamiques du fonctionnement, amenant le tiroir dans une position d'équilibre entre l'effort de l'électro-aimant, l'effort hydrodynamique et l'effort des ressorts.

Il convient aussi d'assurer, quelles que soient les positions des éléments mobiles et pour une course de travail donnée, la proportionnalité entre le courant électrique d'alimentation circulant dans la bobine de l'électro-aimant et l'effort transmis au tiroir hydraulique du distributeur. Ceci est assuré par la conception de l'électro-aimant, notamment en prévoyant que l'ensemble constitué par le noyau mobile et par le poussoir amagnétique est centré et guidé en translation, suivant l'axe central commun à l'électro-aimant et au distributeur hydraulique, par au moins deux bagues de guidage à faible frottement, ces dispositions permettant à la fois de minimiser les frictions lors du déplacement, et de maintenir le noyau mobile centré, avec un entrefer radial constant assurant le fonctionnement "proportionnel" de l'électro-aimant.

Au ressort de calibrage, poussant l'ensemble constitué par le noyau mobile et par le poussoir en direction du distributeur hydraulique, est avantageusement associée une vis de réglage, de manière à permettre le "calage", par l'intermédiaire de la vis de réglage, de la caractéristique débit/courant de tous les régulateurs appartenant à une même série en fabrication industrielle.

L'invention sera de toute façon mieux comprise à l'aide de la description qui suit, en référence au dessin schématique annexé représentant, à titre d'exemples, deux formes d'exécution de ce régulateur hydraulique de débit.
La figure 1 est une vue en coupe longitudinale d'une première forme de réalisation du régulateur hydraulique de débit objet de l'invention;
La figure 2 est une vue en coupe longitudinale d'une autre forme de réalisation de ce régulateur hydraulique de débit.

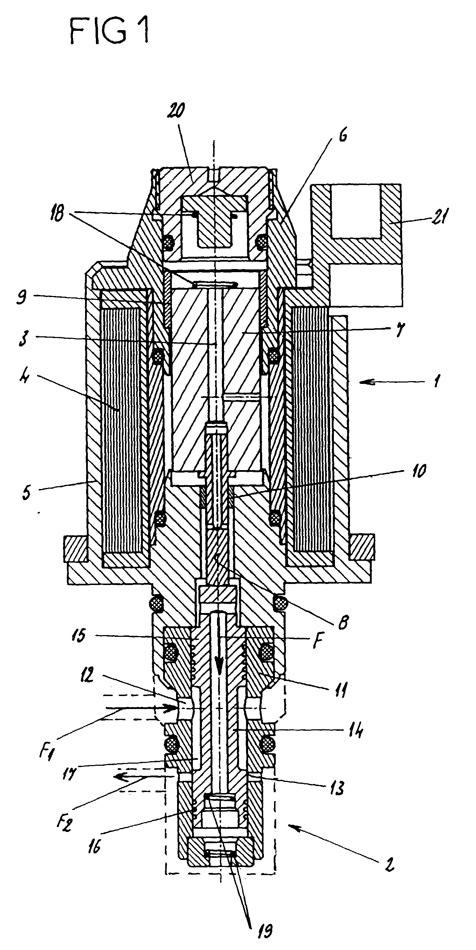

La figure 1 représente un régulateur hydraulique de débit qui se compose, d'une façon générale, d'un électro-aimant 1 et d'un distributeur hydraulique 2, disposés l'un dans le prolongement de l'autre suivant un même axe central 3, l'électro-aimant 1 exerçant une action directe sur le distributeur 2.

L'électro-aimant 1 comprend une bobine d'excitation 4, un circuit magnétique fixe 5, une pièce polaire 6 située du côté éloigné du distributeur 2, et un noyau mobile magnétique 7 prolongé axialement par un poussoir amagnétique 8 en direction du distributeur 2. L'ensemble mobile constitué par le noyau 7 et par le poussoir 8 est parfaitement centré et guidé en translation, suivant l'axe central 3, par deux bagues de guidage 9 et 10 à faible frottement.

Le distributeur hydraulique 2 comprend une chemise cylindrique fixe 11, pourvue d'au moins un orifice radial 12 d'entrée de fluide hydraulique sous pression, et d'au moins un orifice radial 13 de sortie du fluide hydraulique, dont le débit est régulé, le ou les orifices de sortie 13 se présentant comme des lumières rectangulaires, espacées axialement du ou des orifices d'entrée 12. A l'intérieur de la chemise 11 est monté coulissant, dans la direction de l'axe central 3, un tiroir hydraulique 14 qui possède deux portées cylindriques 15 et 16, entre lesquelles s'étend une partie intermédiaire de diamétre réduit. Une chambre annulaire 17 est ainsi aménagée entre la chemise 11 et le tiroir 14.

L'extrémité libre du poussoir 8 est appuyée sur une extrémité du tiroir 14. Un premier ressort hélicoïdal 18, monté à l'intérieur de l'électro-aimant 1, pousse le noyau mobile 7 et le poussoir 8 en direction du distributeur 2. Un second ressort hélicoïdal 19, monté à l'intérieur du distributeur 2 et agissant en sens opposé du précédent sur le tiroir 14, assure le contact entre le tiroir 14 et l'extrémité libre du poussoir 8, ceci quelles que soient les conditions de fonctionnement.

L'électro-aimant 1 assure, grâce à son entrefer radial, un fonctionnement proportionnel, c'est-à-dire qu'il existe une proportionnalité entre le courant électrique d'excitation parcourant la bobine 4, d'une part, et l'effort axial de poussée F transmis au tiroir hydraulique 14 par l'ensemble mobile "noyau 7 + poussoir 8", d'autre part.

En cours de fonctionnement, le fluide hydraulique en provenance d'une source de pression entre dans le distributeur 2 au travers de la chemise 11, suivant la flèche F1, par le ou les orifices radiaux 12, puis il parcourt axialement la chambre annulaire 17, avant de sortir au travers de la chemise 11, suivant la flèche F2, par le ou les autres orifices radiaux 13. Selon sa position axiale, le tiroir 14 obture ou découvre plus ou moins le ou les orifices de sortie 13, par sa portée 16.

Le positionnement axial du tiroir 14 résulte d'un équilibre entre l'effort de poussée F de l'électro-aimant 1, d'une part, et l'effort hydrodynamique généré par le débit de fluide hydraulique passant par les orifices de sortie 13, en tenant compte aussi des efforts mécaniques des ressorts 18 et 19.

L'effort hydrodynamique caractéristique de l'écoulement du fluide au travers du distributeur 2 est proportionnel, pour une différence de pression donnée entre l'entrée et la sortie, au débit de passage. Cet effort hydrodynamique est ascendant (par référence à la figure) et il se traduit, sur le tiroir 14, par une tendance à la réduction de la section de passage par les orifices de sortie 13.

Les deux ressorts 18 et 19 exercent sur le tiroir 14 des efforts dont la résultante est elle aussi ascendante, la raideur mécanique résultante étant inférieure à la "raideur hydraulique" de l'effet hydrodynamique.

Ces efforts se traduisent globalement par une contre-réaction au déplacement du tiroir 14 commandé par l'effet électromagnétique de l'électro-aimant 1, lui-même proportionnel au courant alimentant la bobine 4. Le contrôle de l'effort de l'électro-aimant 1, par son alimentation électrique, permet donc pour une pression d'entrée de fluide donnée de réguler la section de passage au niveau des orifices de sortie 13, afin d'assurer la réponse en débit souhaitée.

Le premier ressort 18 permet, par l'intermédiaire d'une vis de réglage 20 sur laquelle s'appuie ce ressort 18, de calibrer la caractéristique débit de fluide/courant d'alimentation, pour les régulateurs de débit produits en série. Le second ressort 19 assure la stabilité de fonctionnement, quelles que soient les conditions de pression.

On obtient ainsi, à la sortie du distributeur 2, un débit de fluide hydraulique (flèche F2) parfaitement régulé, qui est dirigé vers un circuit ou organe utilisateur de ce débit de fluide.

Enfin on notera que, dans cette première forme de réalisation, le régulateur hydraulique de débit est pourvu d'un connecteur 21 à disposition latérale, pour l'alimentation électrique de l'électro-aimant 1.

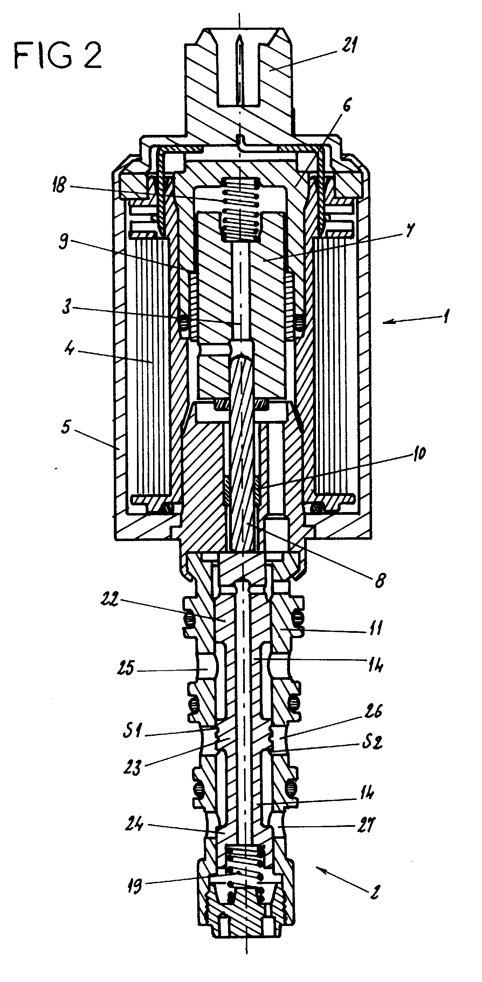

La figure 2, sur laquelle les éléments correspondant à ceux précédemment décrits sont désignés par les mêmes repères, représente un autre régulateur hydraulique de débit, qui se distingue essentiellement par un tiroir hydraulique 14 à trois portées cylindriques 22, 23 et 24, monté coulissant dans une chemise fixe 11 pourvue ici de trois paires d'orifices 25, 26 et 27 diamétralement opposés (plus généralement: trois orifices simples ou multiples, décalés axialement). On obtient ainsi un régulateur de débit à double sens de régulation, d'une part des orifices 25 aux orifices 26, et d'autre part des orifices 26 aux orifices 27

Entre la paire d'orifices 26 et la paire d'orifices 27, l'action de l'électro-aimant 1 vient découvrir la section de passage S1 entre le tiroir 14 et ces quatre orifices. Dans cette phase de régulation, le fonctionnement est identique à celui du régulateur de débit décrit en référence à la figure 1.

Entre la paire d'orifices 26 et la paire d'orifices 27, l'action de l'électro-aimant 1 vient recouvrir la section de passage S2 entre le tiroir 14 et ces quatre orifices. Dans cette phase de fonctionnement, l'effort hydrodynamique vient s'ajouter à l'effort de commande donné par l'électro-aimant 1. Cet effort hydrodynamique joue un rôle de rétroaction analogue à celui décrit dans le cas de la première forme de réalisation.

Par ailleurs, on notera que, dans la forme de réalisation représentée sur la figure 2, le connecteur 21 n'occupe plus une position latérale, mais est situé sur l'axe central 3 du régulateur de débit, à une extrémité de ce régulateur.

Le régulateur hydraulique de débit, précédemment décrit dans deux modes de réalisation, possède des applications multiples notamment dans le domaine automobile, par exemple pour la correction dynamique d'assiette ou pour le pilotage d'un élément de suspension.

Il va de soi que l'invention ne se limite pas aux seules formes d'exécution de ce régulateur hydraulique de débit qui ont été décrites ci-dessus, à titre d'exemples. Elle en embrasse, au contraire, toutes les variantes de réalisation et d'application respectant le même principe. En particulier, l'on ne s'éloignerait pas du cadre de l'invention par des modifications constructives de détail, concernant par exemple le nombre ou la forme des orifices d'entrée et de sortie du fluide hydraulique dans le distributeur.

## Revendications

1. Régulateur hydraulique de débit, à action proportionnelle, comprenant un électro-aimant (1) à noyau mobile (7) et agissant par variation de la section de découvrement d'au moins une lumière traversée par un débit de fluide hydraulique, de telle sorte que le débit de fluide soit proportionnel à un courant électrique alimentant la bobine (4) de l'électro-aimant (1), le régulateur comprenant, dans le prolongement de l'électro-aimant (1), un distributeur hydraulique (2) avec une chemise fixe (11), pourvue d'au moins un orifice radial (12;25,26) d'entrée de fluide hydraulique sous pression et d'au moins un orifice radial (13;26,27) de sortie de fluide, espacé axialement du ou des orifices d'entrée (12;25,26), tandis qu'à l'intérieur de la chemise (11) est monté coulissant un tiroir hydraulique (14) possédant au moins deux portées (15,16;22,23,24) entre lesquelles s'étend au moins une chambre annulaire (17), le tiroir hydraulique (14) étant lié axialement au noyau mobile (7) de l'électro-aimant (1), de telle sorte que ce tiroir hydraulique (14) est déplacé par le noyau mobile (7) en obturant plus ou moins le ou les orifices d'entrée ou de sortie, le débit de fluide passant par la section de découvrement de ces orifices générant un effort hydrodynamique de sens identique ou opposé à l'effort de poussée (F) de l'électro-aimant (1) et servant de contre-réaction à l'intérieur du régulateur de débit, caractérisé en ce que le tiroir hydraulique (14) est lié axialement au noyau mobile (7) de l'électro-aimant (1), dans un sens de déplacement, par un poussoir amagnétique (8) prolongeant le noyau mobile (7) en direction du distributeur hydraulique (2) et appuyé sur une extrémité du tiroir (14), et dans le sens opposé, par un ressort (19) monté à l'intérieur du distributeur hydraulique (2) et assurant un contact permanent entre le tiroir hydraulique (14) et le poussoir amagnétique (8), et en ce qu'il est prévu, du côté de l'électro-aimant (1), un ressort (18) de calibrage, poussant l'ensemble constitué par le noyau mobile (7) et par le poussoir amagnétique (8) en direction du distributeur hydraulique (2).

2. Régulateur hydraulique de débit selon la revendication 1, caractérisé en ce que l'ensemble constitué par le noyau mobile (7) et par le poussoir amagnétique (8) est centré et guidé en translation, suivant l'axe central (3) commun à l'électro-aimant (1) et au distributeur hydraulique (2), par au moins deux bagues de guidage (9, 10) à faible frottement.

3. Régulateur hydraulique de débit selon la revendication 1 ou 2, caractérisé en ce qu'une vis de réglage (20) est associée au ressort de calibrage (18), ce ressort (18) s'appuyant sur la vis de réglage (20).

4. Régulateur hydraulique de débit selon l'une quelconque des revendications 1 à 3, caractérisé en ce qu'il comprend un tiroir hydraulique (14) à trois portées (22,23,24), monté coulissant dans une chemise fixe (11) pourvue de trois orifices simples ou multiples (25,26,27), décalés axialement, de manière à constituer un régulateur de débit à double sens de régulation.

## Claims

1. Proportional-action hydraulic flow regulator, comprising an electromagnet (1) with a movable core (7) and acting by variation in the uncovered cross section of at least one aperture through which a hydraulic fluid flow passes, so that the flow of fluid is proportional to an electric current supplying the coil (4) of the electromagnet (1), the regulator comprising, in line with the electromagnet (1), a hydraulic control valve (2) with a fixed jacket (11), provided with at least one radial pressurised hydraulic fluid inlet orifice (12; 25, 26) and at least one radial fluid outlet orifice (13; 26, 27), spaced apart axially from the inlet orifice or orifices (12; 25, 26), whilst inside the jacket (11) a hydraulic slide valve (14) is slidably mounted, having at least two lengths (15, 16; 20, 23, 24) between which at least one annular chamber (17) extends, the hydraulic slide valve (14) being connected axially to the movable core (7) of the electromagnet (1), so that this hydraulic slide valve (14) is moved by the movable core (7) whilst more or less closing off the inlet and outlet orifice or orifices, the flow of fluid passing through the uncovered cross section of these orifices generating a hydrodynamic force with a direction identical to or opposite to the thrust force (F) of the electromagnet (1) and serving as a feedback within the flow regulator, characterised in that the hydraulic slide valve (14) is connected axially to the movable core (7) of the electromagnet (1), in a direction of movement, by a non-magnetic pusher (8) extending the movable core (7) in the direction of the hydraulic control valve (2) and pressed on one end of the slide valve (14) and, in the opposite direction, by a spring (19) mounted inside the hydraulic control valve (2) and affording permanent contact between the hydraulic slide valve (14) and the non-magnetic pusher (8), and in that there is provided, on the same side as the electromagnet (1), a calibration spring (18), pushing the assembly consisting of the movable core (7) and non-magnetic pusher (8) in the direction of the hydraulic control valve (2).

2. Hydraulic flow regulator according to Claim 1, characterised in that the assembly consisting of the movable core (7) and the non-magnetic pusher (8) is centred and guided in translation, along the central axis (3) common to the electromagnet (1) and hydraulic distributor (2), by at least two low-friction guide rings (9, 10).

3. Hydraulic flow regulator according to Claim 1 or 2, characterised in that an adjustment screw (20) is associated with the calibration spring (18), this spring (18) bearing on the adjustment screw (20).

4. Hydraulic flow regulator according to any one of Claims 1 to 3, characterised in that it comprises a hydraulic slide valve (14) with three sections (22, 23, 24), mounted so as to slide in a fixed jacket (11) provided with three axially offset single or multiple orifices (25, 26, 27), so as to constitute a flow regulator with a dual direction of regulation.

## Patentansprüche

1. Hydraulik-Durchflußregler mit proportionaler Wirkung, umfassend einen Elektromagneten (1) mit beweglichem Kern (7) und wirkend durch Variierung des freien Querschnitts von zumindest einer Öffnung, die so von einem Hydraulikfluidstrom durchquert wird, daß der Fluid-Durchfluß proportional zu einem elektrischen Strom ist, der die Spule (4) des Elektromagneten (1) speist, wobei der Regler in der Verlängerung des Elektromagneten (1) einen Hydraulikverteiler (2) mit einem fixen Mantel (11) umfaßt, der mit zumindest einer radialen Öffnung (12; 25, 26) zum Einlaß des unter Druck befindlichen Hydraulikfluids und mit zumindest einer radialen, zu der oder den Einlaßöffnungen (12; 25, 26) axial beabstandeten Fluidauslaßöffnung (13; 26, 27) versehen ist, während im Inneren des Mantels (11) schiebbar ein Hydraulikschieber (14) montiert ist, der zumindest zwei Auflagen (15, 16; 22, 23, 24) aufweist, zwischen denen sich zumindest eine ringförmige Kammer (17) erstreckt, wobei der Hydraulikschieber (14) axial so mit dem beweglichen Kern (7) des Elektromagneten (1) verbunden ist, daß dieser Hydraulikschieber (14) durch den beweglichen Kern (7) bewegt wird und die Eingangs- oder Ausgangsöffnung bzw. -öffnungen mehr oder weniger verschließt, wobei der Fluidstrom, der durch den freien Querschnitt dieser Öffnungen fließt, eine hydrodynamische Kraft erzeugt, deren Richtung identisch mit oder umgekehrter zu derjenigen der Schubkraft (F) des Elektromagneten (1) ist und als Gegenreaktion im Inneren des Durchflußreglers dient,
dadurch gekennzeichnet, daß der Hydraulikschieber (14) axial mit dem beweglichen Kern (7) des Elektromagneten (1) verbunden ist, und zwar in einer Bewegungsrichtung durch einen nichtmagnetischen Drücker (8), der den beweglichen Kern (7) in Richtung des Hydraulikverteilers (2) verlängert und auf ein Ende des Hydraulikschiebers (14) gestützt ist, und in der entgegengesetzten Richtung durch eine Feder (19), die im Inneren des Hydraulikverteilers (2) montiert ist und einen dauernden Kontakt zwischen dem Hydraulikschieber (14) und dem nichtmagnetischen Drücker (8) gewährleistet,
und daß auf der Seite des Elektromagneten (1) eine Kalibrierfeder (18) vorgesehen ist, die die aus dem beweglichen Kern (7) und dem nichtmagnetischen Drücker (8) bestehende Einheit in Richtung des Hydraulikverteilers (2) drückt.

2. Hydraulik-Durchflußregler nach Anspruch 1, dadurch gekennzeichnet, daß die aus dem beweglichen Kern (7) und dem nichtmagnetischen Drücker (8) bestehende Einheit zentriert ist und durch zumindest zwei Führungsringe (9, 10) mit geringer Reibung entlang der Mittelachse (3), die dem Elektromagneten (1) und dem Hydraulikverteiler (2) gemeinsam ist, in einer Translationsbewegung geführt wird.

3. Hydraulik-Durchflußregler nach Anspruch 1 oder 2, dadurch gekennzeichnet, daß zu der Kalibrierschraube (18) eine Stellschraube (20) gehört, wobei sich diese Schraube (18) auf die Stellschraube (20) aufstützt.

4. Hydraulik-Durchflußregler nach einem der Ansprüche 1 bis 3, dadurch gekennzeichnet, daß er einen Hydraulikschieber (14) mit drei Auflagen (22, 23, 24) umfaßt, der schiebbar in einem fixen Mantel (11) montiert ist, der mit drei axial verschobenen einfachen oder mehrfachen Öffnungen (25, 26, 27) versehen ist, so daß ein Durchflußregler mit doppelter Regelungsrichtung gebildet wird.
